# EUROPEAN PATENT SPECIFICATION

(11) **EP 1 202 940 B1**
(45) Date of publication and mention of the grant of the patent: **10.11.2004**
(21) Application number: 00930973.3
(22) Date of filing: 08.06.2000
(51) Int. Cl.: C04B 7/43

(54) **AN EQUIPMENT FOR CALCINATION**
VORRICHTUNG ZUM CALCINIEREN
EQUIPEMENT DE CALCINATION

(30) Priority: 10.06.1999 CZ 207799
(43) Date of publication of application: 08.05.2002
(73) Proprietor: PSP Engineering A.S., 750 53 Prerov (CZ)
(72) Inventor: POSPISIL, Jaroslav, 750 00 Prerov (CZ); ZAJDLIK, Josef, 750 00 Prerov (CZ); MICHALEK, Zdenek, 750 00 Prerov (CZ); KREJCI, Petr, 750 02 Prerov (CZ); PUMPRLA, Alois, 750 00 Prerov (CZ); SEHNALEK, Alois, 750 02 Prerov (CZ)
(74) Representative: Halaxova, Zdenka
(86) International application number: PCT/CZ2000/000041
(87) International publication number: WO 2000/076934

(56) References cited:
- US-A- 4 004 876
- US-A- 4 004 938
- US-A- 5 292 247

## Description

### Technical Field of the Invention

The present invention deals with an equipment for calcination for precalcining powdered cement raw material before its burning in a rotary kiln, said calcinating equipment comprising a calcinating chamber provided with means for inputting powdered cement raw material and fuel simultaneously with inputting burning air, said calcinating chamber being interconnected with a mixing channel arranged between an input chamber of the rotary kiln and the last cyclone of a cyclone heat exchanger arranged before the rotary kiln.

### Prior Art

A lot of known equipment having a calcinating chamber for calcination of powdered material, for instance of powdered cement raw material, has an inlet for the material usually to the lower part for the calcinating chamber. This area also includes an inlet of hot gases from one or more heat sources, for instance from a clinker cooler, or from the rotary kiln. The powdered material is dispersed to the volume of the calcinating chamber by the influence of the kinetic energy of the entering gases, wherein the desired endothermic reactions - as for instance the dissociation of calcium carbonate - of the powdered material components are running while the powdered raw material is mixed with the added fuel and burning air, or mixed with the entering hot gases. The mixture of gases and of powdered material and possibly also of particles of unburned fuel then flows upwards the calcinating chamber and is led through a tube to a channel located between the rotary kiln and the lower cyclone of a heat exchanger connected after the kiln. In this channel the phase of thermal processing of powdered material preparation is finished before it enters the rotary kiln.

A disadvantage of such types of calcinating equipment is the relatively high pressure energy loss of entering gases, caused by the necessity of sometimes multifold lifting of powdered material, especially in the case a greater amount of material is retained when in the calcinating chamber, as it would be necessary for the desired calcination level. Further, by underoptimal adjusting of operational parameters additionally a falling down of entering powdered material appears in the calcinating chamber. From there it subsequently enters directly the rotary kiln, without passing the thermal process in the calcinating chamber.

There are known structures of calcinating chambers in which the powdered material and also the hot burning air are led with fuel into the upper part of the calcinating chamber. The resulting mixture is then flowing downwards and is subsequently transported from the bottom part of the calcinating chamber through a tube into the gas channel, which connects the rotary kiln, respectively its input chamber with the lower cyclone of the cyclone heat exchanger antecedent to the calcinating chamber. However, the powdered material has no other possibility than falling downwards due to gravitational force. So the residence time of powdered material in the calcinating chamber of this structure is relatively short and, therefore, the possibility of its thermal processing, i.e. the level of calcination, is deterioated. The effort of intensive swirling of powdered material leads additionally to an increase of the pressure loss of hot burning air led into the calcinating chamber for instance from the following clinker cooler.

The mentioned disadvantages lead to worsening of the technological process effectiveness and an increasing investment and operation costs for unit of production.

US-A-5.292.247, US-A-4.004.876 and US-A-4.004.938, respectively describe plants for the production of cement clinker comprising a cyclone type preheater stage, a calcinating chamber and a kiln.

### Summary of the Invention

The above mentioned disadvantages of known solutions are in a considerable extent avoided by the present invention, which is manifested by a calcinating chamber provided with means for inputting powdered cement raw material and fuel simultaneously with inputting burning air, said calcinating chamber being interconnected with a mixing channel arranged between an input chamber of the rotary kiln and the last cyclone of a cyclone heat exchanger arranged before the rotary kiln. The present calcinating equipment is characterized in that the calcinating chamber is connected with the mixing channel both through the removal tube, which is arranged in its lower part, and through at least one interconnecting tube, which is led out from its upper part, whereas the air tube for input of burning air is connected to the middle - working part of the calcinating chamber, where the working part and/or the air tube are further equipped with at least one input of powdered material and with a fuel input.

Preferably, the working part, the upper and the lower part of the calcinating chamber are advantageously coaxial.

According to a further preferable feature of the invention, all parts of the calcinating chamber have a circular cross-section, wherein the diameter of the upper part of the calcinating chamber is smaller than the diameter of its working part.

Further, advantageously, the mouth of the removing tube ends into the mixing channel closer to its lower part than the mouth of the interconnecting tube.

An other advantageous development of the invention is that a regulating member is inserted into the air tube and further that an auxiliary input of powdered material and an auxiliary fuel input are connected to the air tube before its mouth into the calcinating chamber.

A further advantageous development of the invention is that the mixing channel is provided with an additional input of powdered material and with an additional fuel input and, optionally, with an additional air input.

As a result, the construction according to the invention achieves a better efficiency of the calcinating equipment as a whole combined with a lower energy consumption. This then results in decreasing investment and operation costs to unit of production.

### Brief Description of the Figures

The embodiments of the invention are schematically shown in the attached drawings, wherein
Figure 1 shows the basic concept of a calcinating equipment according to the invention;
Figure 2 shows an advantageous version of the connection of the calcinating chamber to the mixing channel;
Figure 3 shows a version of the construction of the calcinating chamber and the ending of the powdered material input;
Figure 4 shows an adaptation of the solution of the input air tube of the calcinating chamber and
Figure 5 shows the adaptation of the mixing channel connected with the calcinating equipment.

### Embodiments of the Invention

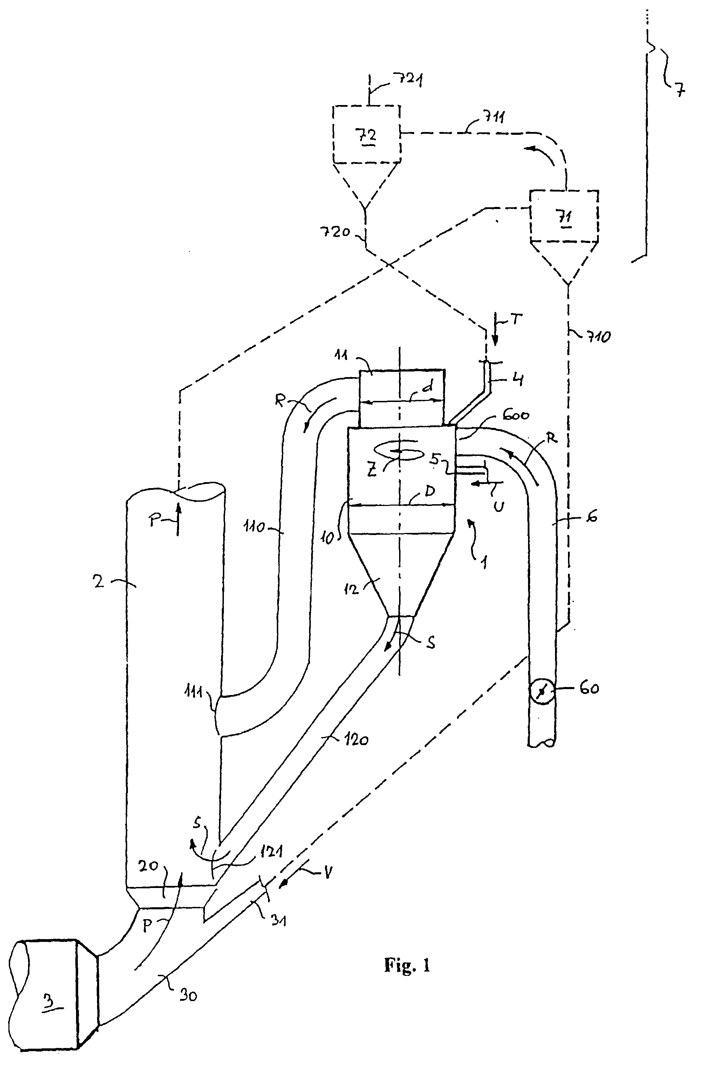

The calcinating equipment according to an embodiment of the invention is depicted in figure 1 showing a part of a technological unit and comprising a rotary kiln 3 with an input chamber 30 and an input tube 31 for inputting powdered material, and a cyclone type heat exchanger 7 designed for preheating powdered material processed subsequently in the rotary kiln 3. It is to be noted that the lower part of the preheater is shown in figure 1 with dashed lines. Figure 1 shows the two lowest cyclones 72, 71 in dashed lines with the output tubes 710 for powdered material and with the removal tube 711 for hot gases of the last cyclone 71 and with the output tube 720 for powdered material and with the removal tube 721 for hot gas of the last but one cyclone 72. The last cyclone 71 and the last but one cyclone 72 are mutually interconnected by the removal tube 711.

As it is shown in figure 1, the calcinating chamber 1 according to the invention is composed of a cylindrical middle position - working part 10, a cylindrical upper part 11, of a diameter d which is smaller than the diameter D of the working part 10, and a conical lower part 12, the most strait end of which ends at the removal tube 120. All these parts are shown as laying on a common vertical axis 100. It is, however, evident, that the axis 100 of the calcinating chamber 1 could be declined from the vertical direction without influence to the essence of the invention.

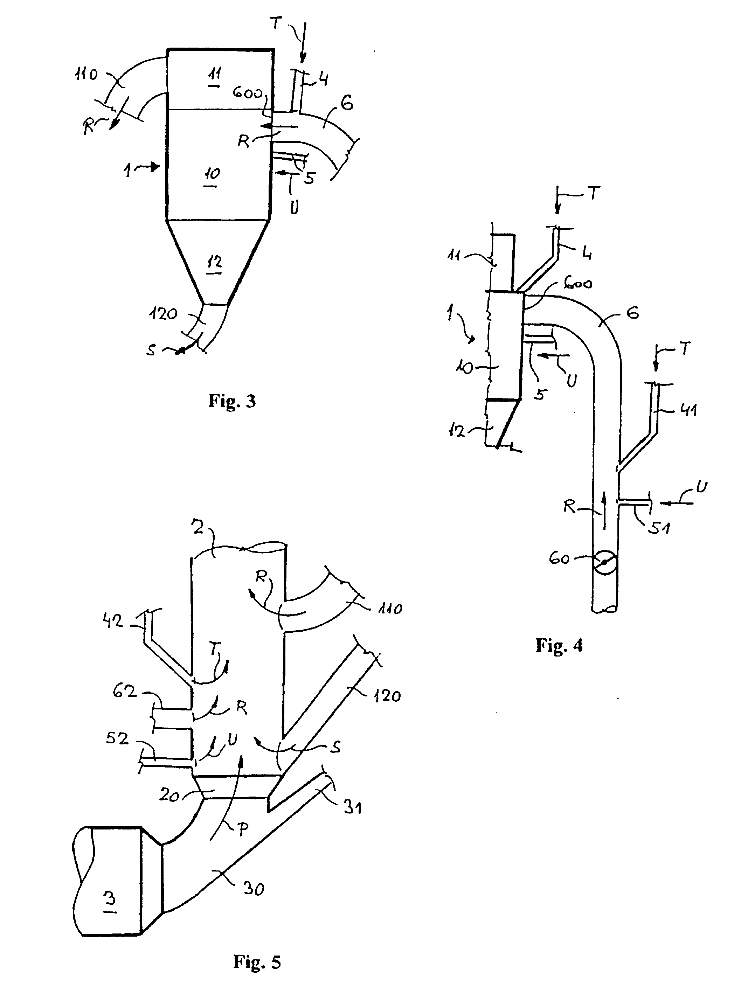

Into the working part 10 of the calcinating chamber 1 an air tube 6 ends with its mouth 600 and the air tube 6 has a regulating member 60, for instance a clack valve. To this working part 10 an input tube 4 of calcined powdered material is connected from upwards through the output tube 720 of the last but one cyclone 72. Further, in the area of the mouth 600 fuel input 5 ends into the working part 10. The connection of the air tube 6 is advantageously realized tangentially, however, the air input can be realized also in other versions with several tubes 6, the mouths 600 of which are positioned at the circumference of the working part 10, and the mouths 600 can also end at mutually different heights. In the latter cases, an independent fuel input 5 and possibly also an independent input 4 of powdered material is/are located at each of the individual mouths 600. The input 4 of powdered material can also be led into the ending part of the air tube 6 (figure 3). The independent input 4 for powdered material can possibly be simultaneously led both to the working part 10 of calcinating chamber 1 and to the ending part of the air tube 6. The detailed construction of individual inputs and their endings are not fundamental for the object of the invention and, therefore, they are not described in details here.

As it is evident from figure 1, the input chamber 30 ends from above into the lower part 20 of the mixing channel 2, to which both the removal tube 120 from the lower part 12 of the calcinating chamber 1 and the interconnecting tube 110 from the upper part 11 of the calcinating chamber 1 are connected. The mixing channel 2 is interconnected with the last cyclone 71 of the cyclone preheater 7.

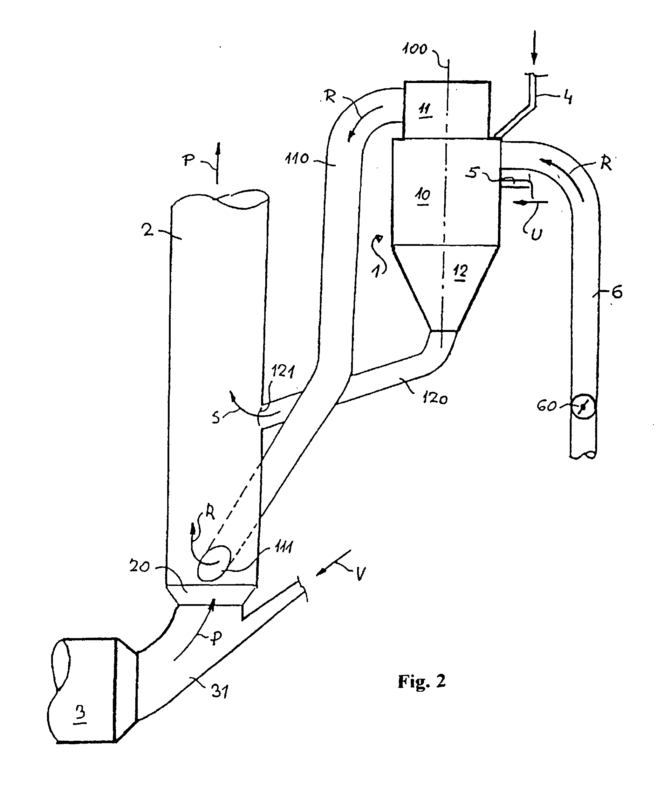

An advantageous embodiment according to figure 2 essentially corresponds to the arrangement according to figure 1 with the difference that the locations of the mouth 111 of the interconnecting tube 110 and the mouth 121 of the removal tube 120 into the mixing channel 2 are mutually replaced in their height.

Figure 3 shows an alternative construction of the calcinating chamber 1 according to an embodiment of the invention. The alternative construction of the calcinating chamber 1 differs from the previous embodiments in that its working part 10 and upper part 11 have the same diameter, whereas the input 4 of powdered material is led to the air tube 6 immediately before its mouth 600 into the working part 10. The cross-section of the calcinating chamber 1 and its individual parts, namely the working part 10, the upper part 11 and the lower part 12, respectively, are not necessarily circular. Without influence to the essence of the invention they can have an oval shape or eventually an angular, advantageously a multiangular cross-sectional shape.

In the arrangement according to figure 4, the air tube 6 according to figure 1 is completed in its upper part with an auxiliary input 41 of powdered material and and auxiliary fuel input. In the arrangement according to figure 5, the lower part 20 of the mixing channel 2 according to figure 1 is completed with an additional input 42 of powdered material, and additional fuel input 52 and an additional air tube 62.

The following description explains the function of the calcinating chamber according to the invention. The powdered material, preheated in the cyclone heat exchanger 7, is led from the last but one cyclone 72 through the output tube 720 and subsequently in the direction of arrow T through the input 4 into the upper area of the working part 10 of the calcinating chamber 10 near near the mouth 600 of the air tube 6. According to figure 3, the input 4 may end in the ending part of the air tube 6 or, eventually, at both locations. The powdered material is here spread out with the combustion by the air stream, and an overflow is advantageously adjusted by the regulation member 60 and at the same the air stream and the powdered material are mixed with the burning fuel, which is fed through the fuel tube 5 in the direction of arrow U.

Passing the thermal process, which is advantageously enhanced by a tangential arrangement of the air tube 6 input causing the rotational movement of the mixture in direction of an arrow Z, a part of the precalcined material - eventually with a part of the combustion products - is falling into the lower part 12 of the calcinating chamber 1 and then is led out through the removal tube 120 in direction of the arrow S into the lower part 20 of the mixing channel 2. Subsequently it is then wafted with the hot gas stream, where the gases are flowing out from the rotary kiln 3 in direction of an arrow P into the last cyclone 71 and in this way it is returned back into the last stage of the preheating process. The remaining - mostly the less weighing - part of precalcined powdered material is then transported with the exhaust gases into the upper part 11 of calcinating chamber 1 and from here is then transported through the interconnecting tube 110 in the direction of an arrow R into the mixing channel 2, and it is returned in the similarly manner into the ending stage of the preheating process. The division of both mentioned parts of the precalcined powdered material leaving the calcinating chamber 1 according to the invention and also the share of connected exhaust gases depends on the construction of the working part 10 and the upper part 11 and on the method of connection of the calcinating chamber 1 to the mixing channel 2. The necessary division of these two parts is, according to the invention, further improved by the fact that the diameter d of the upper calcinating part 11 is chosen smaller than the diameter D of the working part 10 of the calcinating chamber 1.

The powdered material and the exhaust gases put in from the calcinating chamber 1 are mixed in the mixing channel 2 with gases coming out from the input chamber 30 of the rotary kiln 3 in the direction of an arrow P, and after finishing of this part of the thermal process, they powdered material mixed with the gases enters into the last cyclone 71 of the cyclone exchanger 7. The powdered material is here separated from the gases and continues flowing through the removal tube 710 in the direction of an arrow V and subsequently enters the input chamber 30 through the input tube 31. The required burning process is then finished by crossing the powdered material to the rotary kiln 3.

For adjusting an optimal mode of the precalcination process of the processed powdered material auxiliary powdered material can - as an optional version according to the invention - be added in some parts of the equipment and then also additionally thermally processed. For this the auxiliary air input 41 and the auxiliary fuel input 51 into the air tube 6 according to figure 4 and eventually the additional powdered material input 42 together with the additional fuel input 52 and the additional air input through the additional air tube 62 to the mixing channel 2 according to figure 5 are advantageously used.

According to the invention, the choice of the mutual positions of the mouth 111 of the interconnecting tube 110 and the mouth of the removal tube 120 into the mixing channel 2 contributes to an optimization of the working regime of precalcination. These mouths are not necessarily located according to figures 1 and 2, but can, for instance, angularly turned mutually in the lower part 20 of the mixing channel 2 without influencing the essence of the invention.

## Claims

1. A calcinating equipment for precalcination of powdered cement raw material before its burning in a rotary kiln, said calcinating equipment comprising a calcinating chamber (1) provided with means (4 ,5) for inputting powdered cement raw material and fuel simultaneously with inputting burning air, said calcinating chamber (1) being interconnected with a mixing channel (2) arranged between an input chamber (30) of the rotary kiln (3) and the last cyclone (71) of a cyclone heat exchanger (7) arranged before the rotary kiln (3), ***characterized in that*** the calcinating chamber (1) is connected with the mixing channel (2) both through a removal tube (120) arranged at a conical lower part (12) of the calcinating chamber (1) and through at least one interconnecting tube (110), which is led out from the upper part (11) of the calcinating chamber (1), where an air tube (6) for inputting the burning air is connected to the middle - working part (10) of the calcinating chamber (1) and the working part (10) and/or the air tube (6) are further equipped with at least one input (4) for calcined powdered material and with a fuel input (5).

2. A calcinating equipment according to claim 1, ***characte rized in that*** the working part (10), the upper part (11) and the lower part (12) of the calcinating chamber (1) are coaxial.

3. A calcinating equipment according to claims 1 or 2, ***cha racterized in that*** all parts of calcinating chamber (1) have a circular cross-section, wherein the diameter (d) of the upper part (11) of the calcinating chamber (1) is smaller than the diameter (D) of its working part (10).

4. A calcinating equipment according to one of claims 1 to 3, ***characterized in that*** the mouth (121) of the removal tube (120) ends into the mixing channel (2) closer to the lower part (20) of the mixing channel (2) than to the mouth of the interconnecting tube (110) into the mixing channel (2).

5. A calcinating equipment according to one of the claims 1 to 4, ***characterized in that*** a regulation member (60) is inserted into the air tube (6).

6. A calcinating equipment according to one of claims 1 to 5, ***characterized in that*** an auxiliary input (41) of powdered material and an auxiliary fuel input (51) are connected to the air tube (6) before its mouth (600) into the calcinating chamber (1).

7. A calcinating equipment according to one of claims 1 to 6, ***characterized in that*** the mixing channel (2) is provided with an additional input (42) of powdered material and an additional fuel input (52).

## Patentansprüche

1. Kalziniereinrichtung zur Vorkalzinierung pulverförmigen Zementrohmaterials vor seinem Brennen in einem Rotationsofen, wobei die Kalziniereinrichtung eine Kalzinierkammer (1) aufweist, die mit Mitteln (4,5) zur Zufuhr des pulverförmigen Zementrohmaterials und von Brennstoff gleichzeitig mit Verbrennungsluft ausgestattet ist und die mit einem Mischungskanal (2) verbunden ist, der zwischen einer Eingangskammer (30) der Rotationsofens (3) und dem letzten Zyklon (71) eines dem Rotationsofen (3) vorgeschalteten Zyklonwärmetauschers (7) angeordnet ist,
***dadurch gekennzeichnet, dass*** die Kalzinierkammer (1) mit dem Mischungskanal (2) sowohl durch eine Abfuhrrohrleitung (120), die an einem konischen unteren Teil (12) der Kalzinierkammer (1) angeordnet ist als auch durch wenigstens ein Anschlussrohr (110) verbunden ist, das von dem oberen Teil (11) der Kalzinierkammer (1) herausgeführt ist, wo eine Luftrohrleitung (6) für die Brennluftzufuhr mit dem mittleren Arbeitsteil (10) der Kalzinierkammer (1) verbunden ist und wo der Arbeitsteil (10) und/oder die Luftrohrleitung (6) weiterhin mit wenigstens einer Zufuhr (4) für kalziniertes pulverförmiges Material und einer Brennstoffzufuhr (5) ausgerüstet ist.

2. Kalziniereinrichtung nach Anspruch 1, ***dadurch gekennzeichnet, dass*** der Arbeitsteil (10), der obere Teil (11) und der untere Teil (12) der Kalzinierkammer (1) gleichachsig sind.

3. Kalziniereinrichtung nach Anspruch 1 oder 2, ***dadurch gekennzeichnet, dass*** alle Teile der Kalzinierkammer (1) einen kreisförmigen Querschnitt haben, wobei der Durchmesser (d) des oberen Teils der Kalzinierkammer (1) kleiner ist als der Durchmesser (D) des unterenTeils ihres Arbeitsteils (10).

4. Kalziniereinrichtung nach einem der Ansprüche 1 bis 3, ***dadurch gekennzeichnet, dass*** die Mündung (121) der Abfuhrrohrleitung (120) in dem Mischungskanal (2) näher zu dem unteren Teil (20) des Mischungskanals (2) als zur Mündung des Anschlussrohrs (110) in den Mischungskanal (2) endet.

5. Kalziniereinrichtung nach einem der Ansprüche 1 bis 4, ***dadurch gekennzeichnet, dass*** ein Stellglied (60) in die Luftrohrleitung (6) eingesetzt ist.

6. Kalziniereinrichtung nach einem der Ansprüche 1 bis 5, ***dadurch gekennzeichnet, dass*** eine Hilfszufuhr (41) für pulverförmiges Material und eine Hilfsbrennstoffzufuhr (51) mit der Luftrohrleitung (6) vor ihrer Mündung (600) in die Kalzinierkammer (1) verbunden sind.

7. Kalziniereinrichtung nach einem der Ansprüche 1 bis 6, ***dadurch gekennzeichnet, dass*** der Mischungskanal (2) mit einer zusätzlichen Zufuhr (42) für pulverförmiges Material und einer zusätzlichen Brennstoffzufuhr (52) ausgerüstet ist.

## Revendications

1. Equipement calcinatoire pour la précalcination de matériau première en poudre de ciment avant son brûlage dans un four à rotation, où cet équipement est constitué par une chambre calcinatoire (1), qui est pourvue de moyens (4,5) pour l'arrivée de ce matériau en poudre et pour l'arrivée de combustible avec l'arrivée actuelle d'air combustible et est reliée avec un canal mélangeur (2), qui est aménagé entre une chambre d'entrée (30) du four en rotation (3) et le dernier cyclone (71) d'un l'échangeur cyclonique préarangé du four à rotation (3), **caractérisé en ce que** la chambre de calcination (1) est reliée avec le canal mélangeur (2) d'abord par le biais d'un conduit d'évacuation (120), qui est ajusté dans sa partie basse (12) conique une fois au moins par un conduit interconnectant (110), qui est sorti de sa partie haute (11) , et où un conduit d'air (6) pour l'arrivée de l'air combustible est connecté à la partie de travail centrale (10) de la chambre calcinatoire (1), et cette partie de travail (10) et/ou le conduit d'air (6) sont plus loin fournis par au moins une arrivée (4) de matériau en poudre et une arrivée de combustible (5).

2. L'équipement calcinatoire selon la revendication 1, **caractérisé en ce que** la partie de travail (10), la partie haute (11) et la partie basse (12) de la chambre calcinatoire (1) sont coaxiales.

3. L'équipement calcinatoire selon les revendications 1 ou 2, **caractérisé en ce que** toutes les parties de la chambre calcinatoire (1) ont une coupe circulaire, oú la moyenne (d) de la partie haute (11 ) de la chambre calcinatoire (1) est plus petite que la moyenne (D) de sa partie de travail (10).

4. L'équipement calcinatoire selon l'une des revendications de 1 à 3, **caractérisé en ce que** l'orifice (121) du conduit d'évacuation (120) est emboucher dans le canal mélangeur (2) plus à proximité de sa partie basse (20) que l'orifice du conduit interconnectant (110).

5. L'équipement calcinatoire selon l'une des revendications de 1 à 4, **caractérisé en ce que** dans le conduit d'air (6) est inséré un membre régulateur (60).

6. L'équipement calcinatoire selon l'une des revendications de 1 à 5, **caractérisé en ce que** dans le conduit d'air (6) est placé devant son orifice (600) dans la chambre calcinatoire (1) une arrivée d'aide (41) de matériau en poudre et une arrivée d'aide de combustible (51).

7. L'équipement calcinatoire selon l'une des revendications de 1 á 6, **caractérisé en ce que** le canal mélangeur (2) est pourvu d'une arrivée supplémentaire (42) de matériau en poudre et d'une arrivée supplémentaire de combustible (52).
